# EUROPÄISCHE PATENTSCHRIFT

(11) **EP 1 268 354 B1**
(45) Veröffentlichungstag und Bekanntmachung des Hinweises auf die Patenterteilung: **29.11.2006**
(21) Anmeldenummer: 01915035.8
(22) Anmeldetag: 24.02.2001
(51) Int. Cl.: C03C 3/062, C03C 3/087, C03C 8/02, C03C 10/02, C03C 10/04, C03C 10/06, H01T 13/34, C03C 10/00

(54) **GLAS UND GLASPULVERMISCHUNG SOWIE DEREN VERWENDUNG ZUR HERSTELLUNG EINER GLASKERAMIK**
GLASS AND GLASS POWDER MIXTURE AND USE THEREOF FOR THE PRODUCTION OF A GLASS CERAMIC
VERRE ET MELANGE DE POUDRE DE VERRE, ET LEUR UTILISATION POUR LA FABRICATION D'UNE VITROCERAMIQUE

(30) Priorität: 01.04.2000 DE 10016414
(43) Veröffentlichungstag der Anmeldung: 02.01.2003
(73) Patentinhaber: ROBERT BOSCH GMBH, 70442 Stuttgart (DE)
(72) Erfinder: GEIER, Heinz, 71229 Leonberg (DE); POLLNER, Rudolf, 96049 Bamberg (DE); EISELE, Ulrich, 70199 Stuttgart (DE); WANGE, Peter, 07745 Jena (DE)
(86) Internationale Anmeldenummer: PCT/DE2001/000722
(87) Internationale Veröffentlichungsnummer: WO 2001/074728

(56) Entgegenhaltungen:
- DE-A- 2 245 403
- DE-A- 19 708 105
- DUAN R -G ET AL: "Effect of Changing TiO2 Content on Structure and Crystallization of CaO-Al2O3-SiO2 System Glasses" JOURNAL OF THE EUROPEAN CERAMIC SOCIETY,GB,ELSEVIER SCIENCE PUBLISHERS, BARKING, ESSEX, Bd. 18, Nr. 12, 1. November 1998 (1998-11-01), Seiten 1729-1735, XP004134531 ISSN: 0955-2219
- VILLEGAS M A ET AL: "PROPIEDADES Y CARACTERIZACION ESTRUCTURAL DE VIDRIOS DEL SISTEMA CAO-TIO2-AL2O3-SIO2" BOLETIN DE LA SOCIEDAD ESPANOLA DE CERAMICA Y VIDRIO,ES,SOCIEDAD ESPANOLA DE CERAMICA Y VIDRIO, MADRID, Bd. 34, Nr. 3, 1995, Seiten 135-139, XP002068948 ISSN: 0366-3175

## Beschreibung

Die Erfindung betrifft ein Glas, insbesondere ein Glaspulver, und eine Glaspulvermischung, sowie deren Verwendung zur Herstellung einer Glaskeramik, die insbesondere als Widerstandseinschmelzung oder Keramiklot in einer Zündkerze einsetzbar ist.

### Stand der Technik

Aus der Patentanmeldung DE 196 51 454 A1 ist eine Zündkerze mit einer über einen Anschlussbolzen mit einer Zündleitung verbundenen Elektrode bekannt, wobei zwischen der Elektrode und der Zündleitung ein aus einem Glas oder einem Glaskeramikmaterial ausgebildeter Widerstand mit erhöhter Temperaturbeständigkeit angeordnet ist. Darüber hinaus ist daraus bekannt, das als Ausgangsmaterial zur Herstellung dieses Abbrandwiderstandes eingesetzte Glaspulver oberflächlich stromlos zu metallisieren.

Aus der DE 197 08 105 A ist eine Glaskeramik bekannt, die aus den Oxiden der Elemente Ca, Si, Ti und Al besteht. Eine Glaskeramik mit ähnlicher Zusammensetzung ist aus Duan R-G et al., "Effect of Changing TiO₂ Content on Structure and Crystallization of CaO-Al₂O₃-SiO₂ System Glasses", Journal ofthe European Ceramic Soxiety, GB, Elsevier Science Publishers, Barking, Essex, Bd. 18, Nr. 12, 1. November 1998, Seiten 1729-1735, und aus Villegas et al., "Propiedades y caracterizacion estructural de vidrios del sistema CaO-TiO₂-Al₂O₃-SiO₂", Boletin de la Sociedad española de Ceramica y vidrio, Madrid, ES, Bd. 34, Nr. 3, 1995, Seiten 135-139, bekannt. Weiterhin ist aus der DE 22 45 403 A bekannt, ähnliche Glaskeramiken in Zündkerzen zu verwenden.

Der Isolatorfuß von neuartigen Zündkerzen mit Platin-Mittelelektrode wird bis zu 950°C heiß. Auf Grund dieser Temperatur müssen Lösungen zur Kontaktierung der Mittelelektrode, zur Darstellung eines vorgezogenen Abbrandwiderstandes und zur Kontaktierung dieses vorgezogenen Abbrandwiderstandes gefunden werden, wobei alle genannten Elemente eine Betriebstemperatur von mindestens 900°C über 2000 h tolerieren. Gleichzeitig darf bei der Herstellung der Zündkerze die Prozesstemperatur zur Vermeidung von Oxidationen bzw. Verformungen des Bolzenmaterials 950°C nicht überschreiten.

Die Kontaktierung der Mittelelektrode erfolgt bisher üblicherweise über Diffusionsschweißen an einem Kontaktstift. Dabei tritt jedoch das Problem auf, dass der Wärmeausdehnungskoeffizient des Kontaktstiftmaterials vielfach nicht ausreichend an den diesen umgebenden Isolator angepasst ist, so dass unerwünschte Spannungen und Defekte auftreten.

Aufgabe der vorliegenden Erfindung war die Bereitstellung eines Glases und die Bereitstellung einer mit Hilfe dieses Glases hergestellten Glaspulvermischung, die unter anderem zur Herstellung einer temperaturstabilen, hochspannungsfesten Glaskeramik bei niedriger Prozesstemperatur geeignet ist. Diese Glaskeramik soll dann als Widerstandseinschmelzung und/oder als gasdichtes Keramiklot in einer Zündkerze einsetzbar sein.

### Vorteile der Erfindung

Das erfindungsgemäße Glas und die erfindungsgemäße Glaspulvermischung hat gegenüber dem Stand der Technik den Vorteil, dass damit eine Glaskeramik hergestellt werden kann, die bei Raumtemperatur bis zu 20 kV/mm bzw. bei 800°C bis zu 10 kV/mm hochspannungsfest ist. Darüber hinaus beträgt der Wärmeausdehnungskoeffizient dieser Glaskeramik ca. 6 ppm/K bei ca. 100°C bis 200°C und ca. 9 ppm/K bei ca. 700°C bis 800°C, d.h. er ist an das üblicherweise in Zündkerzen eingesetzte Isolatormaterial Aluminiumoxid angepasst.

Weiter hat das erfindungsgemäße Glas eine dilatometrisch bestimmte Erweichungstemperatur E_{g} von ca. 720°C bis 820°C, so dass es möglich ist, schon bei Temperaturen von 850°C bis 950°C glaskeramische Einschmelzungen herzustellen. Dabei ist besonders vorteilhaft, dass die refraktären Phasen Anorthit, Wollastonit und Titanit auskristallisieren, so dass die entstandene Glaskeramik danach bis über 1000°C temperaturstabil ist.

Die erfindungsgemäße Glaspulvermischung erlaubt es zudem vorteilhaft auch, eine Glaskeramik in Form eines elektrisch leitfähigen Glaskeramiklotes herzustellen, das zur Kontaktierung einer Mittelelektrode bzw. eines Abbrandwiderstandes in einer Zündkerze geeignet ist. Dieses leitfähige Keramiklot ist insbesondere oxidationsbeständig und gasdicht.

Die aus dem erfindungsgemäßen Glas bzw. Glaspulver hergestellte Glaskeramik in Form einer Widerstandseinschmelzung ist weiterhin vorteilhaft auch zur Herstellung einer hochtemperaturfesten Widerstandseinschmelzung geeignet.

Insgesamt ergibt sich durch das erfindungsgemäße Glas und die erfindungsgemäße Glaspulvermischung die Möglichkeit, glaskeramische Einschmelzungen herzustellen, wie sie beispielsweise in der Zündkerzenfertigung benötigt werden, die unter anderem eine höhere Temperaturstabilität bei gleichzeitig unveränderter Prozesstemperatur im Vergleich zu üblichen Verfahren aufweisen.

Vorteilhafte Weiterbildungen der Erfindung ergeben sich aus den in den Unteransprüchen genannten Maßnahmen.

So ist es vorteilhaft hinsichtlich Hochspannungsfestigkeit und Prozesstemperatur, wenn das erfindungsgemäße Glas eine Zusammensetzung gemäß Anspruch 3 aufweist.

Besonders vorteilhaft hinsichtlich Hochspannungsfestigkeit, Prozesstemperatur sowie der Bildung der sich bei einer Wärmebehandlung dieses Glaspulvers durch zumindest bereichsweise Kristallisation einstellenden refraktären Phasen ist eine Zusammensetzung gemäß Anspruch 4. Diese Zusammensetzung ist zudem besonders temperaturstabil und hat einen besonders gut an Aluminiumoxid angepassten Wärmeausdehnungskoeffizienten.

Weiter ist vorteilhaft, dass sich das erfindungsgemäße Glas auch zur Herstellung einer niederohmigen glaskeramischen Einschmelzung eignet, indem das Glaspulver vor Einschmelzung und damit der Umwandlung in eine Glaskeramik zumindest teilweise oder zumindest bereichsweise mit einer Oberflächenmetallisierung, insbesondere mit einer Metallisierung mit einem hochtemperaturbeständigen Metall wie Platin, Palladium, Nickel, Wolfram oder einer Legierung dieser Materialien, versehen wird. Diese Oberflächenmetallisierung erfolgt bevorzugt in der aus DE 196 51 454 A1 bekannten Weise stromlos.

Das der erfindungsgemäßen Glaspulvermischung zugesetzte Zirkoniumdioxid bzw. das zugesetzte Mullit eignet sich schließlich vorteilhaft zur Einstellung des Wärmeausdehnungskoeffizienten der schließlich erhaltenen Glaskeramik.

### Ausführungsbeispiele

Zunächst wird aus einer Ausgangsmischung mit einer Zusammensetzung gemäß der nachfolgenden Tabelle in an sich bekannter Weise ein Glas erschmolzen. Dazu werden die einzelnen Bestandteile der Ausgangsmischung für die verschiedenen, jeweils als Ausführungsbeispiel angegebenen Gläser zunächst als Pulver eingesetzt und vermischt, und dann bei Temperaturen von typischerweise mehr als 1500°C zu einem Glas erschmolzen.

| Bestandteile der Ausgangsmischung [Gew.%] | Glas 1 | Glas 2 | Glas 3 | Glas 4 | Glas 5 |
|---|---|---|---|---|---|
| SiO₂ | 46,5 | 47,9 | 45,6 | 45,0 | 45,0 |
| Al₂O₃ | 17,2 | 17,7 | 16,9 | 17,0 | 17,0 |
| CaO | 25,3 | 26,1 | 24,8 | 28,0 | 28,0 |
| Na₂O | 0,5 | 1,0 | 1,0 | 0,5 | 0 |
| K₂O | 0,5 | 1,0 | 1,0 | 0,5 | 0 |
| TiO₂ | 10,1 | 6,2 | 9,8 | 9,0 | 9,0 |
| Li₂O | 0 | 0 | 1,0 | 0 | 1,0 |
| α x 10⁻⁶ [K⁻¹] | 7,5 | 8,0 | 8,8 | 8,3 | 8,4 |
| T_{g} [°C] | 758 | 743 | 678 | 753 | 700 |
| E_{g} [°C] | 792 | 775 | 717 | 786 | 742 |

Die Angaben in der vorstehenden Tabelle hinsichtlich der Zusammensetzung der Ausgangsmischung sind jeweils in Gewichtsprozent angegeben. Zudem sind jeweils auch die Wärmeausdehnungskoeffizienten α im Temperaturbereich von 100°C bis 500°C für die erschmolzenen Gläser angegeben.

Im Übrigen sei betont, dass neben den vorgenannten Bestandteilen in den verschiedenen Ausgangsmischungen auch weitere, typische Glasbestandteile wie MgO, BaO, ZrO₂ und Fe₂O₃ in geringfügigen Anteilen enthalten sein können, deren Gesamtsumme jedoch 2 Gew.% nicht übersteigen sollte.

Unter der Größe T_{g} ist schließlich die gemessene Transformationstemperatur der erhaltenen Gläser zu verstehen, während die Größe E_{g} den dilatometrischen Erweichungspunkt angibt.

Ein besonders bevorzugtes Ausführungsbeispiel hinsichtlich der Eigenschaften des erhaltenen Glases in vorstehender Tabelle ist Glas 4.

Das nach dem Schmelzen erhaltene Glas wird nun zu einem Glaspulver vermahlen und kann dann beispielsweise zur Weiterverarbeitung zu einer hochohmigen glaskeramischen Widerstandseinschmelzung oder einem niederohmigen Glaskeramiklot in einer Zündkerze eingesetzt werden.

Dazu wird das Glaspulver zunächst in der aus Anmeldung DE 196 51 454 A1 bekannten Weise weiterverarbeitet und schließlich bei einer Prozesstemperatur von 850°C bis 950°C in eine Glaskeramik überführt, wobei die refraktären Phasen Anorthit, Wollastonit und Titanit auskristallisieren, so dass die entstehende Glaskeramik bis über 1000°C temperaturstabil ist. Der elektrische Widerstand einer derartigen Widerstandseinschmelzung in Form eines Abbrandwiderstandes in einer Zündkerze beträgt typischerweise mehr als 1 kΩ.

Um aus dem in der vorstehend erläuterten Weise erhaltenen Glaspulver ein elektrisch leitfähiges Glaskeramiklot zu erhalten, kann dieses andererseits auch in der aus der Anmeldung DE 196 51 454 A1 bekannten Weise zunächst mit einer Oberflächenmetallisierung versehen werden. Dazu erfolgt nach einer Bekeimung eine stromlose Oberflächenmetallisierung des Glaspulvers mit einem hochtemperaturbeständigen Metall wie Platin, Palladium, Nickel, Wolfram oder einer Legierung dieser Materialien. Die Dicke dieser Oberflächenmetallisierung beträgt typischerweise 0,5 nm bis 10 nm, wobei das zu metallisierende Glaspulver bevorzugt mit einer mittleren Teilchengröße von weniger als 250 µm, insbesondere mit 10 µm bis 70 µm, eingesetzt wird. Das derart mit einer Oberflächenmetallisierung versehene Glaspulver kann dann erneut bei einer Prozesstemperatur von 850°C bis 950°C zu einer Glaskeramik eingeschmolzen werden.

Die so erhaltene Glaskeramik eignet sich beispielsweise als Glaskeramiklot zur Verbindung beispielsweise eines metallischen Kontaktstiftes oder eines Bolzens in einer Zündkerze mit einem in der vorstehend bereits erläuterten Weise erzeugten glaskeramischen Abbrandwiderstand. Die elektrische Leitfähigkeit eines derartigen Glaskeramiklotes ergibt sich dabei durch die vorgenommene Oberflächenmetallisierung des eingesetzten Glaspulvers, die bei der Einschmelzung eine in eine Glaskeramik-Matrix eingebettete, insbesondere netzwerkartig ausgebildete Metallphase in Form von Metallpfaden ausbildet, die die elektrische Leitfähigkeit des Glaskeramiklotes tragen.

Ein alternatives Ausführungsbeispiel zur Herstellung eines elektrisch leitfähigen Glaskeramiklotes sieht vor, aus den vorstehend beschriebenen Gläsern, beispielsweise aus Glas 4, zunächst zwei verschiedene Glaspulver zu ermahlen, wobei das erste Glaspulver eine mittlere Teilchengröße von 50 µm bis 250 µm aufweist, und wobei das zweite Glaspulver eine mittlere Teilchengröße von unter 100 µm, insbesondere von 10 µm bis 70 µm aufweist. Weiter wird ein Rußpulver mit einer mittleren Teilchengröße von 200 nm bis 2 µm, insbesondere von 400 nm bis 600 nm, bereitgestellt und ein organischer Binder vorbereitet, der aus Carboxymethylcellulose und Dextrin besteht und dem als Lösungsmittel Wasser zugesetzt ist. Schließlich wird zusätzlich ein Zirkoniumdioxid-Pulver mit einer mittleren Teilchengröße von unter 100 µm und ein Mullit-Pulver mit einer mittleren Teilchengröße von unter 100 µm vorbereitet. Danach wird das erste Glaspulver mit dem zweiten Glaspulver, dem Rußpulver, dem Binder, dem Zirkoniumdioxid-Pulver und dem Mullit-Pulver vermischt. Diese Mischung erfolgt dabei derart, dass die Mischung einen Anteil von 40 Gew.% bis 58 Gew.% des ersten Glaspulvers, einen Anteil von 3 Gew.% bis 13 Gew.% des zweiten Glaspulvers, einen Anteil von 0,9 Gew.% bis 2,5 % des Rußpulvers, einen Anteil von 10 Gew.% bis 37 Gew.% des Zirkoniumdioxid-Pulvers, einen Anteil von 8 Gew.% bis 13 Gew.% des Mullit-Pulvers und einen Anteil von 0,6 Gew.% bis 4 Gew.% des Binders aufweist, wobei alle diese Angaben in Gew.% auf eine lösungsmittelfreie Glaspulvermischung bezogen sind. Der Anteil des Lösungsmittels in der derart erhaltenen Glaspulvermischung beträgt insgesamt 12 bis 40 Volumenprozent, insbesondere 22 bis 37 Volumenprozent. Insgesamt ist nach dem Mischen der vorstehenden Komponenten somit eine Glaspulvermischung entstanden, in der die Pulverteilchen des ersten Glaspulvers zumindest weitgehend mit einer Panade aus den übrigen Bestandteilen versehen sind.

Die derart erhaltene Glaspulvermischung wird dann im Weiteren bei einer Prozeßtemperatur von 850°C bis 950°C einer Wärmebehandlung unterzogen, wobei die eingesetzten Glaspulver zumindest bereichsweise bzw. teilweise Kristallisieren und sich erneut die refraktären Phasen Anorthit, Wollastonit und Titanit ausbilden.

Insgesamt ist somit eine Glaskeramik in Form einer Einschmelzung entstanden, die eine Glaskeramik-Matrix mit einer in die Matrix eingebetteten, netzwerkartig ausgebildeten Kohlenstoffphase aufweist, die durch Pyrolyse des der Glaspulvermischung zugesetzten Rußpulvers bzw. organischen Binders entstanden ist.

Auch eine derart erhaltene Glaskeramik eignet sich besonders als Glaskeramiklot bei der Herstellung einer Zündkerze.

## Patentansprüche

1. Glas, insbesondere Glaspulver, das aus einer Ausgangsmischung erschmolzen ist, die 38 Gew.% bis 48 Gew.% SiO₂, 15 Gew.% bis 19 Gew.% Al₂O₃, 4,5 Gew.% bis 11 Gew.% TiO₂ und 23 Gew.% bis 30 Gew.% CaO enthält, **dadurch gekennzeichnet, dass** der Ausgangsmischung mindestens ein Alkalimetalloxid, insbesondere Lithiumoxid, Kaliumoxid oder Natriumoxid, in einem Anteil von jeweils bis zu 1,5 Gew.% zugesetzt ist.

2. Glas nach Anspruch 1, **dadurch gekennzeichnet, dass** die Ausgangsmischung 43 Gew.% bis 48 Gew.% SiO₂, 16,5 Gew.% bis 18 Gew.% Al₂O₃, 6 Gew.% bis 10,5 Gew.% TiO₂, 0,3 Gew.% bis 1,2 Gew.% Na₂O, 0,3 Gew.% bis 1,2 Gew.% K₂O und 24,5 Gew.% bis 28,5 Gew.% CaO enthält.

3. Glas nach Anspruch 1, **dadurch gekennzeichnet, dass** die Ausgangsmischung aus 45 Gew.% SiO₂, 17 Gew.% Al₂O₃, 9 Gew.% TiO₂, 0,5 Gew.% Na₂O, 0,5 Gew.% K₂O und 28 Gew.% CaO besteht

4. Glas nach mindestens einem der Ansprüche 1 bis 3, **dadurch gekennzeichnet, dass** das Glaspulver zumindest teilweise und zumindest bereichsweise mit einer Oberflächenmetallisierung, insbesondere einer Metallisierung mit einem hochtemperaturbeständigen Metall wie Platin, Palladium, Nickel, Wolfram oder einer Legierung dieser Materialien, versehen ist.

5. Glas nach Anspruch 4, **dadurch gekennzeichnet, dass** das Pulver eine mittlere Teilchengröße von weniger als 250 µm, insbesondere von 10 µm bis 70 µm, aufweist, und dass die Dicke der Oberflächenmetallisierung 0,5 nm bis 10 nm beträgt.

6. Glaspulvermischung mit einem ersten Glaspulver nach mindestens einem der Ansprüche 1 bis 3 mit einer mittleren Teilchengröße von 150 µm bis 250 µm und mit einem zweiten Glaspulver nach mindestens einem der Ansprüche 1 bis 3 mit einer mittleren Teilchengröße von unter 100 µm, insbesondere von 10 µm bis 70 µm, sowie einem Rußpulver und einem organischen Binder.

7. Glaspulvermischung nach Anspruch 6, **dadurch gekennzeichnet, dass** das Rußpulver eine mittlere Teilchengröße von 200 nm bis 2 µm, insbesondere von 400 nm bis 600 nm, aufweist.

8. Glaspulvermischung nach Anspruch 6 oder 7, **dadurch gekennzeichnet, dass** der organische Binder Carboxymethylcellulose und Dextrin enthält, und dass dem Binder Wasser als Lösungsmittel zugesetzt ist.

9. Glaspulvermischung nach mindestens einem der Ansprüche 6 bis 8, **dadurch gekennzeichnet, dass** der Mischung Zirkoniumdioxid, insbesondere als Pulver mit einer mittleren Teilchengröße von unter 100 µm, zugesetzt ist.

10. Glaspulvermischung nach mindestens einem der Ansprüche 6 bis 9, **dadurch gekennzeichnet, dass** der Mischung Mullit zugesetzt ist.

11. Glaspulvermischung nach mindestens einem der Ansprüche 6 bis 10, **dadurch gekennzeichnet, dass** die Mischung einen Anteil von 40 Gew.% bis 58 Gew.% des ersten Glaspulvers, einen Anteil von 3 Gew.% bis 13 Gew.% des zweiten Glaspulvers, einen Anteil von 0,9 Gew.% bis 2,5 Gew.% Rußpulver, einen Anteil von 10 Gew.% bis 37 Gew.% Zirkoniumdioxid, einen Anteil von 8 Gew.% bis 13 Gew.% Mullit und einen Anteil von 0,6 Gew.% bis 4 Gew.% Binder aufweist, wobei die Angaben in Gew% auf eine lösungsmittelfreie Glaspulvermischung bezogen sind.

12. Glaspulvermischung nach Anspruch 11, **dadurch gekennzeichnet, dass** der Anteil des Lösungsmittels in der Glaspulvermischung 12 bis 40 Vol.%, insbesondere 22 Vol% bis 37 Vol.%, beträgt.

## Claims

1. Glass, in particular glass powder, which has been melted from a starting mixture which contains 38% by weight to 48% by weight SiO₂, 15% by weight to 19% by weight Al₂O₃, 4.5% by weight to 11% by weight TiO₂ and 23% by weight to 30% by weight CaO, **characterized in that** at least one alkali metal oxide, in particular lithium oxide, potassium oxide or sodium oxide, is added to the starting mixture in a proportion of in each case up to 1.5% by weight.

2. Glass according to Claim 1, **characterized in that** the starting mixture contains 43% by weight to 48% by weight SiO₂, 16.5% by weight to 18% by weight Al₂O₃, 6% by weight to 10.5% by weight TiO₂, 0.3% by weight to 1.2% by weight Na₂O, 0.3% by weight to 1.2% by weight K₂O and 24.5% by weight to 28.5% by weight CaO.

3. Glass according to Claim 1, **characterized in that** the starting mixture consists of 45% by weight SiO₂, 17% by weight Al₂O₃, 9% by weight TiO₂, 0.5% by weight Na₂O, 0.5% by weight K₂O and 28% by weight CaO.

4. Glass according to at least one of Claims 1 to 3, **characterized in that** the glass powder at least in part and at least in regions is provided with a surface metallization, in particular a metallization comprising a metal which is able to withstand high temperatures, such as platinum, palladium, nickel, tungsten or an alloy of these materials.

5. Glass according to Claim 4, **characterized in that** the powder has a mean particle size of less than 250 µm, in particular from 10 µm to 70 µm, and **in that** the thickness of the surface metallization is from 0.5 nm to 10 nm.

6. Glass powder mixture comprising a first glass powder according to at least one of Claims 1 to 3 with a mean particle size of from 150 µm to 250 µm and a second glass powder according to at least one of Claims 1 to 3 with a mean particle size of less than 100 µm, in particular from 10 µm to 70 µm, as well as a carbon black powder and an organic binder.

7. Glass powder mixture according to Claim 6, **characterized in that** the carbon black powder has a mean particle size of from 200 nm to 2 µm, in particular from 400 nm to 600 nm.

8. Glass powder mixture according to Claim 6 or 7, **characterized in that** the organic binder contains carboxymethylcellulose and dextrin, and **in that** water is added to the binder as solvent.

9. Glass powder mixture according to at least one of Claims 6 to 8, **characterized in that** zirconium dioxide, in particular in the form of a powder with a mean particle size of less than 100 µm, is added to the mixture.

10. Glass powder mixture according to at least one of Claims 6 to 9, **characterized in that** mullite is added to the mixture.

11. Glass powder mixture according to at least one of Claims 6 to 10, **characterized in that** the mixture contains from 40% by weight to 58% by weight of the first glass powder, from 3% by weight to 13% by weight of the second glass powder, from 0.9% by weight to 2.5% by weight of carbon black powder, from 10% by weight to 37% by weight of zirconium dioxide, from 8% by weight to 13% by weight of mullite and from 0.6% by weight to 4% by weight of binder, the details in % by weight being based on a solvent-free glass powder mixture.

12. Glass powder mixture according to Claim 11, **characterized in that** the proportion of the solvent in the glass powder mixture amounts to 12 to 40% by volume, in particular 22% by volume to 37% by volume.

## Revendications

1. Verre, en particulier poudre de verre, obtenu par fusion d'un mélange de départ qui contient de 38 % en poids à 48 % en poids de SiO₂, de 15 % en poids à 19 % en poids d'Al₂O₃, de 4,5 % en poids à 11 % en poids de TiO₂ et de 23 % en poids à 30 % en poids de CaO,
**caractérisé en ce qu'**
au mélange de départ on ajoute au moins un oxyde de métaux alcalins, en particulier de l'oxyde de lithium, de l'oxyde de potassium ou de l'oxyde de sodium, dans une proportion pouvant atteindre jusqu'à 1,5 % en poids.

2. Verre selon la revendication 1,
**caractérisé en ce que**
le mélange de départ contient de 43 % en poids à 48 % en poids de SiO₂, de 16,5 % en poids à 18 % en poids d'Al₂O₃, de 6 % en poids à 10,5 % en poids de TiO₂, de 0,3 % en poids à 1,2 % en poids de Na₂O, de 0,3 % en poids à 1,2 % en poids de K₂O et de 24,5 % en poids à 28,5 % en poids de CaO.

3. Verre selon la revendication 1,
**caractérisé en ce que**
le mélange de départ est constitué de 45 % en poids de SiO₂, de 17 % en poids d'Al₂O₃, de 9 % en poids de TiO₂, de 0,5 % en poids de Na₂O, de 0,5 % en poids de K₂O et de 28 % en poids de CaO.

4. Verre selon au moins l'une quelconque des revendications 1 à 3,
**caractérisé en ce que**
la poudre de verre est pourvue, au moins en partie et au moins par endroits, d'une métallisation superficielle, en particulier d'une métallisation avec un métal résistant aux hautes températures comme le platine, le palladium, le nickel, le tungstène ou un alliage de ces matériaux.

5. Verre selon la revendication 4,
**caractérisé en ce que**
la poudre présente une taille moyenne de particule inférieure à 250 µm, en particulier de 10 µm à 70 µm et l'épaisseur de la métallisation superficielle est de 0,5 nm à 10 nm.

6. Mélange de poudres de verre comportant une première poudre de verre selon au moins l'une quelconque des revendications 1 à 3, ayant une taille moyenne de particule de 150 µm à 250 µm, et une deuxième poudre de verre, selon au moins l'une quelconque des revendications 1 à 3, ayant une taille moyenne de particule inférieure à 100 µm, en particulier de 10 µm à 70 µm, ainsi qu'une poudre de noir de carbone et un liant organique.

7. Mélange de poudres de verre selon la revendication 6,
**caractérisé en ce que**
la poudre de noir de carbone présente une taille moyenne de particule de 200 nm à 2 µm, en particulier de 400 nm à 600 nm.

8. Mélange de poudres de verre selon la revendication 6 ou 7,
**caractérisé en ce que**
le liant organique contient de la carboxyméthylcellulose et de la dextrine, et on ajoute de l'eau au liant en tant que solvant.

9. Mélange de poudres de verre selon au moins l'une quelconque des revendications 6 à 8,
**caractérisé en ce que**
du dioxyde de zirconium est ajouté au mélange, en particulier sous forme de poudre ayant une taille moyenne de particule inférieure à 100 µm.

10. Mélange de poudres de verre selon au moins l'une quelconque des revendications 6 à 9,
**caractérisé en ce que**
de la mullite est ajoutée au mélange.

11. Mélange de poudres de verre selon au moins l'une quelconque des revendications 6 à 10,
**caractérisé en ce que**
le mélange présente une fraction de 40 % en poids à 58 % en poids de la première poudre de verre, une fraction de 3 % en poids à 13 % en poids de la deuxième poudre de verre, une fraction de 0,9 % en poids à 2,5 % en poids de poudre de noir de carbone, une fraction de 10 % en poids à 37 % en poids de dioxyde de zirconium, une fraction de 8 % en poids à 13 % en poids de mullite et une fraction de 0,6 % à 4 % en poids de liant, les quantités indiquées en % en poids se rapportant à un mélange de poudres de verre exempt de solvant.

12. Mélange de poudres de verre selon la revendication 11,
**caractérisé en ce que**
la fraction de solvant dans le mélange de poudres de verre est de 12 à 40 % en volume, en particulier de 22 à 37 % en volume.
